# EUROPÄISCHE PATENTSCHRIFT

(11) **EP 3 420 290 B1**
(45) Veröffentlichungstag und Bekanntmachung des Hinweises auf die Patenterteilung: **31.07.2024**
(21) Anmeldenummer: 18725167.3
(22) Anmeldetag: 14.05.2018
(51) Int. Cl.: F26B 3/084, F26B 23/00, F26B 23/10

(54) **VERDAMPFUNGSTROCKNER UND VERFAHREN ZU DESSEN BETRIEB**
EVAPORATION DRYER AND METHOD FOR ITS OPERATION
SÉCHOIR PAR ÉVAPORATION ET MÉTHODE POUR SON OPÉRATION

(30) Priorität: 15.05.2017 DE 102017110534
(43) Veröffentlichungstag der Anmeldung: 02.01.2019
(73) Patentinhaber: BMA Braunschweigische Maschinenbauanstalt GmbH, 38122 Braunschweig (DE)
(72) Erfinder: CASPERS, Gerald, 38527 Meine (DE); HAFEMANN, Hartmut, 31275 Lehrte (DE)
(74) Vertreter: Stornebel, Kai
(86) Internationale Anmeldenummer: PCT/EP2018/062336
(87) Internationale Veröffentlichungsnummer: WO 2018/210724

(56) Entgegenhaltungen:
- EP-A2- 0 273 406
- DE-A1- 2 901 723
- JP-A- 2015 014 387
- US-A1- 2008 127 507
- US-A1- 2014 325 869
- US-A1- 2016 348 023

## Beschreibung

Die Erfindung betrifft einen Verdampfungstrockner zur Trocknung von Partikeln mit einem Prozessraum mit zumindest einem Produkteinlass zum Zuführen von zu trocknenden Partikeln in den Prozessraum und einem Produktauslass zum Abführen getrockneter Partikel aus dem Prozessraum, einem innerhalb des Prozessraums angeordneten Wärmetauscher mit zumindest einem Einlass in den Wärmetauscher für hochgespannten Dampf als Heizdampf, insbesondere aus einer Dampferzeugungseinrichtung, und einem Kondensatauslass aus dem Wärmetauscher, wobei der Kondensatauslass mit einem Entspannungsbehälter verbunden ist. Die Erfindung betrifft auch ein Verfahren zum Betreiben eines solchen Verdampfungstrockners. Der Verdampfungstrockner dient insbesondere zur Trocknung von fluidisierbaren Partikeln, beispielsweise von Schnitzeln bei der Herstellung von Zucker aus Zuckerrüben, kann jedoch auch bei der Trocknung anderer Partikel oder partikelähnlicher Produkte eingesetzt werden. Der Verdampfungstrockner kann in der Lebensmittelindustrie ebenso wie bei der Trocknung von Vorprodukten oder von Zwischenprodukten oder zur Trocknung von Schlämmen eingesetzt werden.

Im Rahmen einer industriellen Produktion ist es häufig der Fall, dass die benötigte elektrische Energie eigenverantwortlich erzeugt wird. Dazu wird in einer eigenen Dampferzeugungseinrichtung hochgespannter Heizdampf hergestellt, der einer Turbine zugeleitet wird, um so mithilfe eines Generators den benötigten elektrischen Strom für die Fabrik, beispielsweise für die Zuckerfabrik, zu erzeugen. Unter einem hochgespannten Dampf versteht man Dampf, der unter einem hohen Überdruck steht. Neben der Erzeugung elektrischer Energie wird auch für die Trocknung von Produkten oder Partikeln als Wärmequelle Heizdampf benötigt, beispielsweise für einen Verdampfungstrockner, insbesondere einen Wirbelschichtverdampfungstrockner. Dabei gilt es eine Balance zu finden, um den Verbrauchern, nämlich der Turbine und dem Verdampfungstrockner, die notwendige Dampfmenge in der erforderlichen Qualität zukommen zu lassen. Um dies zu gewährleisten, könnte in der Dampferzeugungseinrichtung oder in dem Kesselhaus der Druck erhöht werden, was sich jedoch nicht beliebig realisieren lässt. Häufig setzt ein erhöhter Dampfdruck den Bau eines neuen Kesselhauses voraus, was mit sehr hohen Kosten verbunden ist. Eine andere Möglichkeit besteht darin, das Wärmepotential des Heizdampfkondensates besser auszunutzen, also desjenigen Kondensates, das aus dem Dampf entsteht, der durch den Wärmetauscher in dem Verdampfungstrockner durchgeleitet worden ist und sich bei der Erwärmung des zu trocknenden Produktes abgekühlt hat.

Aus der EP 2 801 779 A1 ist ein Verfahren und ein System zur Trocknung von Partikeln bekannt, bei dem einem Verdampfungstrockner zum Trocknen von feuchten Partikeln in einen geschlossenen Container einem Wärmetauscher Heizdampf zugeleitet wird. Der Wärmetauscher ist innerhalb des geschlossenen Behälters angeordnet. Der Behälter weist einen oberen und einen unteren zylindrischen Teil auf. Der Wärmetauscher weist zudem Kanäle auf, die es ermöglichen, Brüden, welcher aus der Verdampfung des Wassers aus dem Produkt entsteht, zu erhitzen. Der Wärmetauscher ist zweistufig ausgebildet, wobei der erste Wärmetauscherteil oberhalb des zweiten Wärmetauscherteils angeordnet ist und die Kanäle für den Brüden durch den ersten und zweiten Wärmetauscher hindurchführen. Die Erhitzung des Brüdens erfolgt indirekt durch die Kondensation des Heizdampfes in dem unteren Wärmetauscher. Das dabei entstehende Kondensat wird durch den oberen Wärmetauscher, den sogenannten Rekuperator geleitet, kühlt sich dort ab und gibt einen Teil seiner Wärmeenergie indirekt an den Brüden in dem Prozessraum ab. Hierbei werden zusätzliche Pumpen benötigt. Der Wärmeübergang zwischen dem Kondensat und den Rohren im Rekuperator hängt stark von der Strömungsgeschwindigkeit des Kondensates ab. Zudem erfordert diese Konstruktion einen erhöhten Aufwand an Pumpenleistung. Weiterhin wird durch die Aufteilung in einen Dampfwärmetauscher und einen Kondensatwärmetauscher die Flexibilität der Anlage stark eingeschränkt.

Werden sowohl eine Turbine als auch ein Verdampfungstrockner mit dem Dampf aus nur einer Dampferzeugungseinrichtung betrieben, wird der Dampfdruck innerhalb der Dampferzeugungseinrichtung oder innerhalb des Kesselhauses zur Speisung der Turbine üblicherweise konstant gehalten, da Turbinen vergleichsweise empfindlich auf Druckschwankungen reagieren. Ein veränderter Dampfbedarf des Verdampfungstrockners wird deshalb durch die Drosselung des Dampfdruckes realisiert, wobei jedoch Trocknungspotential vernichtet wird.

Die EP 0 273 406 A2 betrifft ein Verfahren zum Trocknen von Schüttgütern in einem Wirbelbett-Trockner mit von einem Heizmedium durchströmten Wärmetauscher-Einbauten, die von dem Schüttgut während des Trocknungsvorganges berührt werden. Dabei wird zumindest ein Teil des Wassers aus dem Schüttgut entfernt und aus dem Trockner als Brüden herausgeführt. Die Brüden werden entstaubt. Eine Teilmenge der entstaubten Brüden wird als Wirbelmedium in den Wirbelbett-Trockner zurückgeführt. Eine andere Teilmenge der entstaubten Brüden wird verdichtet und als Heizmedium durch die Wärmetauscher-Einbauten geführt, darin kondensiert und als Kondensat zur Druckreduzierung über einen Kondensomaten in einen Entspannungsbehälter geführt. Ein Teil des dabei entstehenden Dampfes wird in den zu verdichtenden Brüden-Teilmengenstrom eingeleitet. Zumindest ein Teil des verbleibenden Kondensats wird zur Vorwärmung des zu trocknenden Schüttgutes verwendet.

Die JP 2015014387 A betrifft ein Fluidbett-Entwässerungssystem zum Trocknen von Braunkohle mit überhitztem Heizdampf. Abgase aus dem Trockner werden in einem Dampfkompressor komprimiert und einer Heizleitung innerhalb des Fluidbetttrockners zugeführt.

Die US 2014/325869 A1 betrifft ein Verfahren zum Trocknen von Schüttgütern nach dem Stand der Technik.

Aufgabe der vorliegenden Erfindung ist es, den Dampfbedarf eines Verdampfungstrockners zu reduzieren.

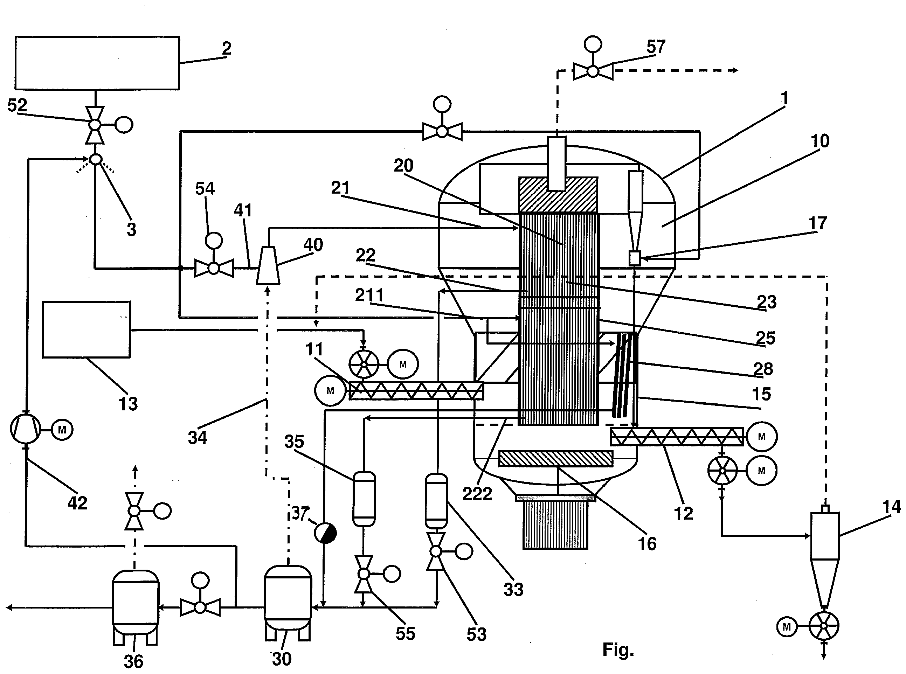

Erfindungsgemäß wird diese Aufgabe durch eine Vorrichtung mit den Merkmalen des Hauptanspruches gelöst. Vorteilhafte Ausgestaltungen und Weiterbildungen der Erfindung sind in den Unteransprüchen, der Beschreibung sowie der Figur offenbart.

Der erfindungsgemäße Dampftrockner zur Trocknung von Partikeln, insbesondere von fluidisierbaren Partikeln wie Hackschnitzeln oder Rübenextraktionsschnitzeln, mit einem Prozessraum mit zumindest einem Produkteinlass zum Zuführen von zu trocknenden Partikeln in den Prozessraum und einem Produktauslass zum Abführen getrockneter Partikel aus dem Prozessraum, einem innerhalb des Prozessraumes angeordneten Wärmetauscher, mit zumindest einem Einlass in den Wärmetauscher für hochgespannten Dampf als Heizdampf, insbesondere aus einer Dampferzeugungseinrichtung oder einer Turbine, und mit zumindest einem Kondensatauslass aus dem Wärmetauscher, wobei der Kondensatauslass mit einem Entspannungsbehälter verbunden ist, sieht vor, dass an dem Entspannungsbehälter zumindest eine Pumpe angeschlossen ist, die Entspannungsdampf aus dem Entspannungsbehälter abpumpt, verdichtet und dem Heizdampf zuleitet. Der bei der Trocknung von Partikeln verwendete hochgespannte Dampf kondensiert aufgrund des vergleichsweise hohen Druckes auf einem vergleichsweise hohen Temperaturniveau und das entstehende Kondensat wird in einem Behälter aufgefangen.

Bei einem einstufigen Wärmetauscher liegt ein Druck an dem Kondensatbehälter an, der dem Heizdampfdruck im Wärmetauscher entspricht. Zur Erzeugung von Entspannungsdampf sind dem Kondensatbehälter ein Regelventil zur Druckreduzierung und ein Entspannungsbehälter nachgeschaltet. Von dem Entspannungsbehälter wird über eine Pumpe der entstehende Entspannungsdampf abgepumpt und dem Wärmetauscher zugeführt. Durch die Saugwirkung der Pumpe ergibt sich die Möglichkeit, vergleichsweise viel Entspannungsdampf aus dem ablaufenden Kondensat des Wärmetauschers zu gewinnen und mit einem erhöhten Druck der Trocknerbeheizung erneut zur Verfügung zu stellen. Durch die Verminderung des Drucks im Entspannungsbehälter erhöht sich die Menge des Entspannungsdampfes und dabei verringert sich die Temperatur des Kondensats. Die Druckerhöhung des Entspannungsdampfes erfolgt durch eine eine Dampfstrahlpumpe. Bei dem Einsatz einer Dampfstrahlpumpe wird der Heizdampf als Treibmedium verwendet. Durch das Hinzufügen des Entspannungsdampfes zu dem Heizdampf wird die verfügbare Heizdampfmenge erhöht und die von der Dampferzeugungseinrichtung benötigte Heizdampfmenge entsprechend verringert.

In der Erfindung ist die Pumpe als eine Dampfstrahlpumpe mit einem Treibdampfanschluss ausgebildet, wobei an dem Treibdampfanschluss zunächst ein Teilstrom des Heizdampfes anliegt. Der Vorteil der Verwendung einer Dampfstrahlpumpe besteht darin, dass sie wartungsfrei arbeitet und ohne bewegliche Teile auskommt. Dadurch ist es möglich, allein durch den verwendeten Heizdampf, der zur Trocknung benötigt wird, Entspannungsdampf aus dem Kondensat des Wärmetauschers zu gewinnen.

Je nach gewünschtem Rückführungsgrad des Entspannungsdampfes können unterschiedliche Heizdampfmengen der Dampfstrahlpumpe als Treibdampf zugeleitet werden, sodass sich eine variable Zumischung und Ausnutzung der in dem Entspannungsdampf vorhandenen Energie verwirklichen lässt.

In einer Weiterbildung der Erfindung ist es vorgesehen, dass der Wärmetauscher mehrstufig, insbesondere zweistufig aufgebaut ist und einer ersten Stufe Mischdampf aus dem Heizdampf und Entspannungsdampf und einer zweiten Stufe Heizdampf ohne Zumischung von Entspannungsdampf zuführbar ist oder zugeführt wird. Die Kombination des mehrstufigen, insbesondere zweistufigen Wärmetauschers mit einer Pumpe zur Druckerhöhung des Entspannungsdampfes ermöglicht die Ausnutzung des Entspannungsdampfes aller Kondensate. Die Ausgestaltung des Verdampfungstrockners mit einem mehr- oder zweistufigen Wärmetauscher hat den Vorteil, dass die Stufen mit unterschiedlich hohen Heizdampfdrücken beaufschlagt werden können. Ebenso besteht die Möglichkeit, dass die Wärmetauscherstufen mit unvermischtem Heizdampf betrieben werden, um die Trocknungsleistung zu maximieren. Durch diese Variabilität kann der Verdampfungstrockner sowohl leistungs- als auch energieoptimiert betrieben werden.

Vorteilhafterweise wird der Wärmetauscher in einem Gegenstromverfahren betrieben oder einem angenäherten Gegenstromverfahren, wobei die erste Stufe bei einem senkrecht stehenden Verdampfungstrockner mit Mischdampf betrieben oben angeordnet ist, während die zweite Stufe oder weitere Stufen mit einem höheren Dampfdruck beaufschlagt und unten angeordnet sind. Die zweite Stufe des Wärmetauschers wird bei einem zweistufigen Aufbau bevorzugt mit dem höheren Heizdampfdruck beaufschlagt. Da beide Stufen des Wärmetauschers mit Dampf beaufschlagt werden, bleibt die Option bestehen, die Trocknerleistung durch Druckerhöhung der ersten Stufe zu erhöhen. Dies geschieht durch eine Verringerung der Beimischung von Entspannungsdampf in der ersten Stufe, wodurch sich jedoch die Vorteile einer Dampfeinsparung nur noch eingeschränkt realisieren lassen. Es besteht aber durch die Variation der Einspeisemenge die Möglichkeit, den Verdampfungstrockner hinsichtlich seiner Leistung anzupassen und im Grenzfall beide oder alle Wärmetauscherstufen mit dem gleichen Druck zu betreiben.

Mit dem erfindungsgemäßen Verdampfungstrockner besteht die Möglichkeit, mit nur einer Dampfqualität aus der Dampfbereitstellungseinrichtung einen geteilten Wärmetauscher zu betreiben und über den Grad der zusätzlichen Einspeisung von Heizdampf in den oberen Wärmetauscher eine Variation in der Trocknungsleistung zu erreichen. Bei der Verwendung einer Dampfstrahlpumpe als Saugpumpe wird der Entspannungsdampf durch den Treibdampf in seinem Druck erhöht, sodass aufgrund der Druckerhöhung des Entspannungsdampfes in der Dampfstrahlpumpe die Baugröße der ersten Stufe des Wärmetauschers vergleichsweise klein gehalten werden kann.

Wenn der Wärmetauscher zweistufig oder mehrstufig betrieben wird, fällt in beiden oder allen Stufen Kondensat an. Eine Weiterbildung der Erfindung sieht vor, dass den beiden oder allen Stufen getrennte Kondensatbehälter zugeordnet sind, die dann mit dem Entspannungsbehälter gekoppelt sind. Das in den Stufen anfallende Kondensat kann durch eine Zusammenführung des Kondensats genutzt werden, sodass eine mehrfache Nutzung des Kondensates ermöglicht werden kann und aus dem gemeinsamen vermischten Kondensat bei der Entspannung noch nutzbarer Entspannungsdampf gewonnen werden kann.

Weiteres Kondensat kann von Heizflächen oder Heizeinrichtungen aus in dem Prozessraum oder außerhalb des Prozessraumes liegenden Heizflächen zu dem Entspannungsbehälter direkt oder über Kondensatbehälter zugeleitet und der damit entstehende Entspannungsdampf dem oberen Wärmetauscher bereitgestellt werden. Dazu sind entsprechende Kondensatleitungen aus dem Prozessraum zu dem Entspannungsbehälter oder den Kondensatbehältern vorgesehen.

Die Kondensatbehälter sind bevorzugt über ein Regelventil mit dem Entspannungsbehälter gekoppelt, um das Druckniveau des Entspannungsbehälters zu reduzieren.

Die Kondensatbehälter weisen ein Druckniveau auf der Höhe des Druckes des jeweils angeschlossenen Wärmetauschers auf. Der gemeinsame Entspannungsbehälter weist vorzugsweise ein Druckniveau auf, das unterhalb des Druckniveaus des Heizdampfes oder des Wärmetauschers liegt und somit auch eine geringere Temperatur im Vergleich zu der Temperatur und dem Druckniveau in den Kondensatbehältern oder in dem Wärmetauscher.

Zur weiteren Flexibilisierung der Ausnutzung des hochgespannten Dampfes können mehrere Dampfstrahlpumpen parallel geschaltet werden, sodass auch vergleichsweise große Mengen an Entspannungsdampf mit dem Heizdampf komprimiert werden können. Besonders in Produktionsphasen mit Teillast ist das Abschalten einzelner Dampfstrahlpumpen sinnvoll.

In einer bevorzugten Ausgestaltung des Verdampfungstrockners ist dieser als ein Wirbelschichtverdampfungstrockner ausgebildet, der einen ringartigen Prozessraum ausbildet. Bei einer zylindrischen Ausgestaltung einer Außenhülle des Verdampfungstrockners und einer im Wesentlichen kreisförmigen Anordnung des zentral angeordneten Wärmetauschers, gegebenenfalls auch des zweistufigen Wärmetauschers, ist ein ringförmiger Prozessraum ausgebildet, der mit einer Fördereinrichtung zum Zuführen eines Fluidisierungsmittels, insbesondere von Dampf, von unten in den Prozessraum versehen ist. Innerhalb des Prozessraumes werden, bevorzugt durch sich vertikal oder geneigt erstreckende Wände, sich in Vertikalrichtung erstreckende Zellen ausgebildet, in denen sich das zu trocknende und zu fluidisierende Produkt, beispielsweise Hackschnitzel oder andere Partikel, befindet. In einer Zelle wird das zu trocknende, feuchte Produkt eingebracht, beispielsweise über eine Zellenradschleuse oder eine ähnliche Fördereinrichtung. Von dieser Eintragszelle wird das zu trocknende Produkt entlang dem ringartigen Prozessraum von Zelle zu Zelle transportiert. Die Transportrichtung wird im Wesentlichen dabei durch einen Druckabfall in der Wirbelschicht vorgegeben, der sich von der Einlasszelle zu einer Austragszelle bildet, an deren unteren Ende der Produktauslass angeordnet ist. In der Austragszelle wird keine oder eine verringerte Fluidisierung realisiert. Wenn der Boden geschlossen ist, erfolgt keine Fluidisierung. Wenn eine verringerte Fluidisierung gewünscht ist, erfolgt diese durch eine geringfügige Perforierung des Bodens. Die Zellen sind an ihren oberen Enden offen, sodass sich das Produkt über die jeweiligen oberen Enden der Zellwänden von einer Zelle zur anderen bewegt, bis das Produkt in einem getrockneten Zustand zu der Austragszelle gelangt, in der es nach unten fällt und dort ausgetragen wird, beispielsweise durch eine Zellenradschleuse und/oder eine entsprechende Austragseinrichtung wie ein Schneckenförderer. Weiterhin können die Zellwände untere Öffnungen aufweisen, durch die ein Teil des Produktes von einer Zelle in die benachbarte Zelle transportiert wird. In dem Prozessraum kann ein Überdruck herrschen, grundsätzlich ist es jedoch auch möglich, dass der Verdampfungstrockner auch bei Atmosphärendruck arbeitet. Der ringartige Prozessraum kann auch konisch ausgebildet sein und zwischen der Außenwand und der Innenwand einen konstanten oder sich verändernden, insbesondere sich nach oben vergrößernden Abstand aufweisen. Der Wirbelschichtverdampfungstrockner kann auch als rein zylindrische Konstruktion ohne ein konisches Zwischenstück ausgebildet sein.

Von dem Entspannungsbehälter für Kondensat kann eine Verbindungsleitung zu einer Mischstelle führen, die der Dampferzeugungseinrichtung nachgelagert ist. In dieser Verbindungsleitung wird Kondensat aus dem Entspannungsbehälter oder aus Kondensatbehältern mit dem Heizdampf, der unmittelbar aus einer Dampferzeugungseinrichtung oder einer Turbine kommt, gemischt, wodurch sich eine Dampfmengenerhöhung bei einer gleichzeitigen Temperaturverringerung und ggf. einer Druckverringerung des Heizdampfes ergibt. Über diese Zumischung des Kondensats im Bereich der Mischstelle kann eine gleichbleibende Qualität des Heizdampfes, der dem Wärmetauscher oder den Wärmetauschern und der Pumpe zugeleitet wird, sichergestellt werden, auch wenn es Schwankungen in der Dampfqualität aus der Druckerzeugungseinrichtung gibt. Darüber hinaus kann über die Menge der Zumischung die jeweils gewünschte Dampfqualität eingestellt werden, falls sich die Trocknerleistung an das zu trocknende Produkt anpassen lassen muss.

Zwischen der Pumpe und der Dampferzeugungseinrichtung kann ein Regelventil angeordnet sein.

Die Erfindung betrifft ebenfalls ein Verfahren zum Betreiben eines Verdampfungstrockners zur Trocknung von Partikeln, mit einem Prozessraum mit zumindest einem Produkteinlass, durch den zu trocknende Partikel in den Prozessraumraum eingeführt werden, und einem Produktauslass, durch den getrocknete Partikel aus dem Prozessraum abgeführt werden, mit einem vorzugsweise innerhalb des Prozessraumes angeordneten Wärmetauscher, in den über zumindest einen Einlass hochgespannter Dampf als Heizdampf, insbesondere aus einer Dampferzeugungseinrichtung, eingeleitet wird und aus dem durch zumindest einen Kondensatauslass Kondensat abgeleitet und einem Entspannungsbehälter zugeleitet wird, wobei aus dem Entspannungsbehälter Entspannungsdampf über zumindest eine Pumpe abgepumpt und dem Heizdampf zugeleitet wird, wobei die Pumpe als Dampfstrahlpumpe mit einem Treibdampfanschluss ausgebildet ist, an dem zumindest ein Teilstrom des Heizdampfes anliegt, und in der der Entspannungsdampf mit dem Heizdampf gemischt und von ihr als Mischdampf dem Wärmetauscher zugeleitet wird. Der Verdampfungstrockner ist im Wesentlichen wie oben beschrieben aufgebaut, durch die Zuleitung von Entspannungsdampf zu dem Heizdampf lässt sich die von der Dampferzeugungseinrichtung benötigte Dampfmenge reduzieren und eine Anpassung an die benötigte Leistung erreichen.

Dem Verdampfungstrockner kann dabei Heizdampf von unterschiedlichen Quellen in unterschiedlichen Qualitäten zugeführt werden. Unterschiedlichen Wärmetauscherstufen bei einem mehrstufigen Aufbau können unterschiedliche Dampfqualitäten zugeführt werden. Die Dampfqualitäten können aus einer oder verschiedenen Dampferzeugungseinrichtungen bereitgestellt werden. Beispielsweise kann auch Dampf von einer Turbine eingesetzt werden.

Nachfolgend wird ein Ausführungsbeispiel der Erfindung anhand der einzigen Figur näher erläutert. In der Figur ist eine schematische Darstellung einer Verdampfungstrockneranlage anhand eines Wirbelschichtverdampfungstrockners dargestellt.

In der Figur ist ein Verdampfungstrockner 1 in Gestalt eines Wirbelschichtverdampfungstrockners dargestellt. Der Verdampfungstrockner 1 weist einen Prozessraum 10 mit einem Produkteinlass 11 zum Zuführen von zu trocknenden Partikeln, beispielsweise Hackschnitzeln, Spänen, Pellets oder anderen fluidisierbaren Partikeln mit einem zu reduzierenden Feuchtegehalt. Dem Produkteinlass 11 können Einrichtungen zum Zuführen der Partikel aus einem Vorratsraum 13 vorgelagert sein, im dargestellten Ausführungsbeispiel sind dies eine Zellenradschleuse und ein Schneckenförderer, die beide motorisch betrieben sind. An dem Produktauslass 12 sind in umgekehrter Reihenfolge ein motorisch angetriebener

Schneckenförderer und eine Zellenradschleuse angeordnet, die das fertig getrocknete Produkt in einen Entspannungszyklon 14 befördern Der Aufbau des Wirbelschichtverdampfungstrockners 1 sieht ein im Wesentlichen ein zylindrisches Gehäuse 15 mit einem zentral darin angeordneten Wärmetauscher 20 vor, der aus einer Vielzahl von Wärmetauscherelementen ausgebildet sein kann. Alternativ zu einem im Wesentlichen zylindrischen Gehäuse 15 kann dieses auch sich konisch erweiternd oder aus einer Kombination zylindrischer und konische Abschnitten ausgebildet sein. Der Wärmetauscher 20 bildet zusammen mit dem zylindrischen Gehäuse 15 den ringartigen Prozessraum 10 aus. Sofern auch der Wärmetauscher 20 eine runde Außenkontur hat, ist der Prozessraum 10 ringförmig, grundsätzlich sind auch polygonale Innen- und Außenkonturen des Prozessraumes 10 möglich. Außerhalb des Verdampfungstrockners 10 ist ein Regelventil 57 für den Trocknerdruck angeordnet. Über eine Fördereinrichtung 16 wird von unten ein Fluidisierungsmittel in Form von Brüden oder Dampf durch einen Siebboden an der Unterseite des Prozessraumes 10 geleitet. Innerhalb des Prozessraumes 10 sind senkrechte und/oder in Förderrichtung geneigte Wände angeordnet, sodass der ringförmige Prozessraum 10 in einzelne Zellen unterteilt ist. Die Wände können bis auf den Siebboden reichen und ermöglichen an ihren oberen Enden und ggf. weiteren, nicht dargestellten Öffnungen einen Übergang zu benachbarten Zellen, sodass das fluidisierte Produkt oder die fluidisierten Partikel von dem Produkteinlass 11 zu dem Produktauslass 12 durch den gesamten Prozessraum 10 hindurchtransportiert werden. Vorteilhaft ist, wenn die Einlasszelle unmittelbar neben der Auslasszelle liegt, sodass sich das Produkt einmal um den Wärmetauscher 20 herum durch den Prozessraum 10 bewegen muss. Sobald die Austragszelle erreicht ist, kann das getrocknete Produkt dort durch die entsprechenden Fördereinrichtungen abtransportiert werden. Dieser Aufbau ist grundsätzlich bekannt, beispielsweise aus der EP 1 956 326 A1.

Der Wärmetauscher 20 ist in dem dargestellten Ausführungsbeispiel zweistufig ausgebildet und weist zwei Einlässe 21, 211 auf, über die Heizdampf von einer Dampferzeugungseinrichtung 2, beispielsweise einem Kesselhaus, das hochgespannten Heizdampf einerseits zum Betreiben einer Turbine zur Erzeugung elektrischer Energie und andererseits zur Bereitstellung von Dampf zur Trocknung der Partikel bereitstellt, in den Wärmetauscher 20 eingeleitet wird. Der jeweilige Einlass 21, 211 ist in dem oberen Teil der jeweiligen Wärmetauscherstufe oder Überhitzerstufe angeordnet. An der jeweiligen Unterseite der senkrecht orientierten Wärmetauscherstufen 23, 25 sind die entsprechenden Kondensatauslässe 22, 222 angeordnet. Die Kondensatauslässe 22, 222 führen zu getrennten Kondensatbehältern 33, 35, in denen das aus der jeweiligen Wärmetauscherstufe 23, 25 kommende Kondensat, das unter dem Betriebsdruck des Wärmetauschers anliegt aufgefangen wird. Auslassseitig ist jedem Kondensatbehälter 33, 35 ein Regelventil 53, 55 zugeordnet, über das das abzuführende Kondensat hinsichtlich des Füllstandes in dem Kondensatbehälter 33, 35 geregelt wird. Von den Kondensatbehältern 33, 35 führen Leitungen zu einem gemeinsamen Entspannungsbehälter 30, in dem das Kondensat aus beiden Wärmetauscherstufen 23, 25 und ggf. nicht näher beschriebenen Heizflächen gesammelt wird. In dem Entspannungsbehälter 30 herrscht ein gegenüber dem Betriebsdruck des Wärmetauschers 20 geringerer Druck. Das darin gesammelte Kondensat weist eine wesentlich geringere Temperatur als das Kondensat in den Kondensatbehältern 33, 35 und eine ebenfalls geringere Temperatur im Vergleich zu dem Heizdampf auf. Der Temperaturunterschied bedingt das Entstehen von Entspannungsdampf.

In dem Prozessraum 10 sind weiterhin interne Heizflächen 28 oder Heizplatten angeordnet, in denen sich ebenfalls Kondensat bilden kann, das über eine Kondensatleitung mit einem eingebauten Kondensatableiter 37 zu dem Entspannungsbehälter 30 geleitet wird. Alternativ zu einer direkten Zuleitung kann das Kondensat aus den Heizflächen 28 auch über die Kondensatbehälter 33, 35 für die Wärmetauscherstufen 23, 25 zu dem Entspannungsbehälter 30 geleitet werden.

Von dem Entspannungsbehälter 30 führt eine Entspannungsdampfleitung 34 zu einer Saugpumpe 40, die in dem dargestellten Ausführungsbeispiels als eine Dampfstrahlpumpe ausgebildet ist. An der Dampfstrahlpumpe 40 liegt Heizdampf aus der Dampferzeugungseinrichtung 2 an einem Treibdampfanschluss 41 an, so dass der Heizdampf als Treibdampf der Dampfstrahlpumpe 40 zugeleitet wird. Der Dampfstrahlpumpe 40 ist ein Regelventil 54 vorgeschaltet, um den Betriebsdruck des Treibdampfes steuern zu können. Innerhalb der Dampfstrahlpumpe 40 wird der Heizdampf mit dem Entspannungsdampf aus dem Entspannungsbehälter 30 vermischt, sodass sich das aufgrund des Saugvorganges durch die Dampfstrahlpumpe 40 wieder zu Dampf gewordene Kondensat als Entspannungsdampf mit dem Heizdampf mischt. Dadurch vergrößert sich die der ersten Wärmetauscherstufe 23 zugeführte Dampfmenge.

Vor dem Regelventil 54 verzweigt sich die Heizdampfleitung von der Dampfbereitstellungseinrichtung 2. Über einen oberen Leitungszweig wird ein Teilstrom über ein Regelventil zum Antreiben eines Ejektors 17 innerhalb des Prozessraums 10 geleitet. Eine wesentlich größere Dampfmenge wird in die zweite Wärmetauscherstufe 25 geleitet, die unterhalb der ersten, oberen Wärmetauscherstufe 23 angeordnet ist. An der zweiten Wärmetauscherstufe 25 liegt ein höherer Dampfdruck als in der ersten Wärmetauscherstufe 23 an. Über die Menge des zugemischten Entspannungsdampfes aus dem Entspannungsbehälter 30 ist es möglich, unterschiedliche Drücke für die erste Wärmetauscherstufe 23 einzustellen, sodass eine Anpassung an den jeweils unterschiedlichen Wärmebedarf möglich und die Trocknerleistung insbesondere bei einem Teillastbetrieb leicht einstellbar ist. Für eine Erhöhung der Trocknerleistung wird die zugeführte Menge an Entspannungsdampf verringert, sodass sich im Extremfall beide Wärmetauscherstufen 23, 25 mit dem unvermischten Heizdampf betreiben lassen.

Von dem Entspannungsbehälter 30 oder alternativ in einer nicht dargestellten Variante von anderen Kondensatbehältern führt eine Kondensatleitung 42 zu einer Mischstelle 3, in der Kondensat dem originären Heizdampf aus der Dampfbereitstellungseinrichtung 2 zugemischt wird, nachdem der Heizdampf durch ein Regelventil 52 hindurchgetreten ist. Dadurch ist es möglich, die Qualität des dem Verdampfungstrockner 1 zugeführten Dampfes nach Bedarf einzustellen, insbesondere den Druck und die Temperatur zu verringern und die Gesamtdampfmenge zu erhöhen.

Dem Entspannungsbehälter 30 ist ein weiterer Behälter 36 zur Aufnahme von Kondensat bei einer geringeren Temperatur und einem geringeren Druck nachgeschaltet, das weiter verwendet werden kann.

### Bezugszeichenliste

- 1: Verdampfungstrockner
- 2: Dampferzeugungseinrichtung
- 3: Mischstelle
- 10: Prozessraum
- 11: Produkteinlass
- 12: Produktauslass
- 13: Vorratsraum
- 14: Entspannungszyklon
- 15: Zylindrisches Gehäuse
- 16: Fördereinrichtung
- 17: Ejektor
- 20: Wärmetauscher
- 21: Heizdampfeinlass oberer Wärmetauscher
- 22: Kondensatauslass oberer Wärmetauscher
- 23: Oberer Wärmetauscher
- 25: Unterer Wärmetauscher
- 28: Interne Heizflächen
- 30: Entspannungsbehälter
- 33: Kondensatbehälter oberer Wärmetauscher
- 34: Entspannungsdampfleitung
- 35: Kondensatbehälter unterer Wärmetauscher
- 36: Kondensatbehälter
- 40: Pumpe
- 41: Treibdampfanschluss
- 42: Kondensatleitung zur Mischstelle
- 53: Regelventil oberer Wärmetauscher
- 54: Regelventil für Treibdampf
- 55: Regelventil unterer Wärmetauscher
- 57: Regelventil für Trocknerdruck
- 211: Heizdampfeinlass unterer Wärmetauscher
- 222: Kondensatauslass unterer Wärmetauscher

## Patentansprüche

1. Verdampfungstrockner (1) zur Trocknung von Partikeln, mit
- einem Prozessraum (10) mit zumindest einem Produkteinlass (11) zum Zuführen von zu trocknenden Partikeln in den Prozessraum (10) und einem Produktauslass (12) zum Abführen getrockneter Partikel aus dem Prozessraum (10),
- einem innerhalb des Prozessraumes (10) angeordneten Wärmetauscher (20),
- mit zumindest einem Einlass (21, 211) in dem Wärmetauscher (20) für hochgespannten Dampf als Heizdampf und zumindest einem Kondensatauslass (22, 222) aus dem Wärmetauscher (20), wobei
- der zumindest eine Kondensatauslass (22, 222) mit einem Entspannungsbehälter (30) verbunden ist,
wobei an dem Entspannungsbehälter (30) zumindest eine Pumpe (40) angeschlossen ist, die Entspannungsdampf aus dem Entspannungsbehälter (30) abpumpt und dem Heizdampf zuleitet, **dadurch gekennzeichnet, dass** die Pumpe (40) als Dampfstrahlpumpe mit einem Treibdampfanschluss (41) ausgebildet ist, an dem zumindest ein Teilstrom des Heizdampfes anliegt, und in der der Entspannungsdampf mit dem Heizdampf gemischt und von ihr als Mischdampf dem Wärmetauscher (20) zugeleitet wird.

2. Verdampfungstrockner nach Anspruch 1, **dadurch gekennzeichnet, dass** der Druck innerhalb des Entspannungsbehälters (30) unterhalb des Druckes des Heizdampfes eingestellt ist.

3. Verdampfungstrockner nach einem der voranstehenden Ansprüche, **dadurch gekennzeichnet, dass** der Wärmetauscher (20) mehrstufig aufgebaut ist und einer ersten Stufe (23) Mischdampf aus dem Heizdampf und Entspannungsdampf und einer zweiten Stufe (25) der Heizdampf dem Wärmetauscher (20) zuführbar ist.

4. Verdampfungstrockner nach Anspruch 3, **dadurch gekennzeichnet, dass** den beiden Stufen (23, 25) getrennte Kondensatbehälter (33, 35) zugeordnet sind, die mit dem Entspannungsbehälter (30) gekoppelt sind.

5. Verdampfungstrockner nach Anspruch 4, **dadurch gekennzeichnet, dass** die Kondensatbehälter (33, 35) über ein Regelventil (53, 55) mit dem Entspannungsbehälter (30) gekoppelt sind.

6. Verdampfungstrockner nach Anspruch 4 oder 5, **dadurch gekennzeichnet, dass** die Kondensatbehälter (33, 35) ein Druckniveau auf Höhe des Druckes des Heizdampfes oder darunter aufweisen.

7. Verdampfungstrockner nach einem der voranstehenden Ansprüche, **dadurch gekennzeichnet, dass** er als Wirbelschichtverdampfungstrockner mit einem ringartigen Prozessraum (10) ausgebildet und mit einer Fördereinrichtung (16) zum Zuführen eines Fluidisierungsmittels von unten in den Prozessraum (10) versehen ist, wobei in dem Prozessraum (10) sich in Vertikalrichtung erstreckende Zellen ausgebildet sind, von denen eine Zelle eine nicht oder vermindert von unten von dem Fluidisierungsmittel durchströmte Austragszelle bildet, an deren unterem Ende der Produktauslass (12) angeordnet ist und die Zellen an ihren oberen Enden offen sind.

8. Verdampfungstrockner nach einem der voranstehenden Ansprüche, **dadurch gekennzeichnet, dass** mehrere Pumpen (40) parallel zueinander geschaltet sind.

9. Verdampfungstrockner nach einem der voranstehenden Ansprüche, **dadurch gekennzeichnet, dass** in dem Prozessraum (10) ein Überdruck herrscht.

10. Verdampfungstrockner nach einem der voranstehenden Ansprüche, **dadurch gekennzeichnet, dass** von dem Entspannungsbehälter (30) eine Verbindungsleitung (42) zu einer Mischstelle (3) führt, die einer Dampferzeugungseinrichtung (2) oder Turbine nachgelagert ist und in der der Heizdampf mit Kondensat aus dem Entspannungsbehälter (30) und/oder Kondensatbehältern (33, 35, 36) gemischt wird.

11. Verdampfungstrockner nach einem der voranstehenden Ansprüche, **dadurch gekennzeichnet, dass** zwischen der Pumpe (40) und der Dampferzeugungseinrichtung (2) ein Regelventil (54) angeordnet ist.

12. Verdampfungstrockner nach einem der voranstehenden Ansprüche, **dadurch gekennzeichnet, dass** Kondensat von Heizplatten (28) oder Heizeinrichtungen aus dem Prozessraum (10) oder außerhalb des Prozessraumes (10) zu dem Entspannungsbehälter (30) direkt oder über Kondensatbehälter (33, 35, 36) oder Kondensatableiter (37) geleitet wird.

13. Verfahren zum Betreiben eines Verdampfungstrockners (1) zur Trocknung von Partikeln, mit
- einem Prozessraum (10) mit zumindest einem Produkteinlass (11), durch den zu trocknende Partikel in den Prozessraum (10) eingeführt werden, und einem Produktauslass (12), durch den getrocknete Partikel aus dem Prozessraum (10) abgeführt werden,
- mit einem Wärmetauscher (20), in den über zumindest einen Einlass (21, 211) hochgespannter Dampf als Heizdampf aus einer Dampferzeugungseinrichtung (2) oder einer Turbine eingeleitet wird und aus dem durch zumindest einen Kondensatauslass (22, 222) Kondensat abgeleitet und einem Entspannungsbehälter (30) zugeleitet wird, wobei aus dem Entspannungsbehälter (30) Entspannungsdampf über zumindest eine Pumpe (40) abgepumpt und dem Heizdampf aus der Dampferzeugungseinrichtung (2) oder der Turbine zugeleitet wird, **dadurch gekennzeichnet, dass** die Pumpe (40) als Dampfstrahlpumpe mit einem Treibdampfanschluss (41) ausgebildet ist, an dem zumindest ein Teilstrom des Heizdampfes anliegt, und in der der Entspannungsdampf mit dem Heizdampf gemischt und von ihr als Mischdampf dem Wärmetauscher (20) zugeleitet wird.

14. Verfahren nach Anspruch 13, **dadurch gekennzeichnet, dass** dem Verdampfungstrockner (1) der Heizdampf aus verschiedenen Dampferzeugungseinrichtungen (2) in unterschiedlichen Dampfqualitäten zugeführt wird.

## Claims

1. An evaporation dryer (1) for the drying of particles, comprising
- a process chamber (10) having at least one product inlet (11) for the feeding of particles to be dried into the process chamber space (10) and having a product outlet (12) for the evacuation of dried particles from the process chamber (10),
- a heat exchanger (20) arranged within the process chamber (10),
- comprising at least one inlet (21, 211) in the heat exchanger (20) for highly pressurized steam as heating steam and at least one condensate outlet (22, 222) from the heat exchanger (20), wherein
- the at least one condensate outlet (22, 222) is connected to an expansion tank (30),
wherein to the expansion tank (30) there is connected at least one pump (40), which pumps off flash steam from the expansion tank (30) and supplies it to the heating steam, **characterized in that** the pump (40) is configured as a steam jet pump having a motive steam port (41) to which at least a partial flow of the heating steam is applied, and in which the flash steam is mixed with the heating steam and fed from it as mixed steam to the heat exchanger (20).

2. The evaporation dryer as claimed in claim 1, **characterized in that** the pressure within the expansion tank (30) is set below the pressure of the heating steam.

3. The evaporation dryer as claimed in one of the preceding claims, **characterized in that** the heat exchanger (20) is of multi-stage construction, and to a first stage (23) mixed steam consisting of heating steam and flash steam, and to a second stage (25) heating steam can be fed to the heat exchanger (20).

4. The evaporation dryer as claimed in claim 3, **characterized in that** to the two stages (23, 25) are assigned separate condensate tanks (33, 35), which are coupled to the expansion tank (30).

5. The evaporation dryer as claimed in claim 4, **characterized in that** the condensate tanks (33, 35) are coupled to the expansion tank (30) via a control valve (53, 55).

6. The evaporation dryer as claimed in one of the preceding claims, **characterized in that** the condensate tanks (33, 35) have a pressure level equating to or below the pressure of the heating steam.

7. The evaporation dryer as claimed in one of the preceding claims, **characterized in that** it is configured as a fluidized-bed evaporation dryer having a ring-like process chamber (10), and is provided with a conveying device (16) for feeding a fluidizing agent from below into the process chamber (10), wherein in the process chamber (10) are configured cells which extend in the vertical direction and of which one cell forms a discharge cell, which is not, or in reduced measure, flowed through from below by the fluidizing agent and at the lower end of which is arranged the product outlet (12), and the cells, at their upper ends, are open.

8. The evaporation dryer as claimed in one of the preceding claims, **characterized in that** a plurality of pumps (40) are connected in parallel to one another.

9. The evaporation dryer as claimed in one of the preceding claims, **characterized in that**, in the process chamber (10), an overpressure prevails.

10. The evaporation dryer as claimed in one of the preceding claims, **characterized in that**, from the expansion tank (30), a connecting line (42) leads to a mixing point (3), which is arranged downstream of a steam generating device (2) and in which the heating steam is mixed with condensate from the expansion tank (30) and/or condensate tanks (33, 35, 36).

11. The evaporation dryer as claimed in one of the preceding claims, **characterized in that** between the pump (40) and the steam generating device (2) is arranged a control valve (54).

12. The evaporation dryer as claimed in one of the preceding claims, **characterized in that** condensate is conducted from heating plates (28) or heating devices out of the process chamber (10) or outside the process chamber (10), to the expansion tank (30) directly or via condensate tanks (33, 35, 36) or condensate drains (37).

13. A method for operating an evaporation dryer (1) for the drying of particles, comprising
- a process chamber (10) having at least one product inlet (11), through which particles to be dried are introduced into the process chamber space (10), and having a product outlet (12), through which dried particles are evacuated from the process chamber (10),
comprising a heat exchanger (20), into which, via at least one inlet (21, 211), highly pressurized steam is passed as heating steam and from which, through at least one condensate outlet (22, 222), condensate is led off and supplied to an expansion tank (30), wherein expansion steam is pumped out of the expansion tank (30) via at least one pump (40) and fed to the heating steam from the steam generating device (2) or the turbine, **characterized in that** the pump (40) being designed as a steam jet pump with a motive steam port (41) to which at least a partial flow of the heating steam is applied, and in which the flash steam is mixed with the heating steam and fed from it as mixed steam to the heat exchanger (20).

14. The method as claimed in claim 13, **characterized in that** heating steam is fed to the evaporation dryer (1) from various steam generating devices (2) in different steam qualities.

## Revendications

1. Séchoir à évaporation (1) pour le séchage de particules, comprenant
- une chambre de traitement (10) présentant au moins une entrée de produit (11), destinée à amener des particules à sécher jusque dans la chambre de traitement (10), et une sortie de produit (12), destinée à évacuer les particules séchées hors de la chambre de traitement (10),
- un échangeur de chaleur (20) disposé à l'intérieur de la chambre de traitement (10),
- présentant au moins une entrée (21, 211) dans l'échangeur de chaleur (20) pour la vapeur à haute pression comme vapeur de chauffage, et au moins une sortie de condensat (22, 222) hors de l'échangeur de chaleur (20),
- ladite au moins une sortie de condensat (22, 222) étant reliée à un récipient de détente (30),
dans lequel
au moins une pompe (40) est raccordée au récipient de détente (30), laquelle pompe la vapeur de détente hors du récipient de détente (30) et l'amène à la vapeur de chauffage,
**caractérisé en ce que** la pompe (40) est conçue comme une pompe à jet de vapeur ayant un raccord de vapeur motrice (41) auquel s'applique au moins un flux partiel de la vapeur de chauffage, et dans laquelle la vapeur de détente est mélangée à la vapeur de chauffage et est amenée sous forme de vapeur mixte à l'échangeur de chaleur (20) par ladite pompe.

2. Séchoir à évaporation selon la revendication 1,
**caractérisé en ce que** la pression à l'intérieur du récipient de détente (30) est réglée en dessous de la pression de la vapeur de chauffage.

3. Séchoir à évaporation selon l'une des revendications précédentes,
**caractérisé en ce que** l'échangeur de chaleur (20) est constitué de plusieurs étages, et un premier étage (23) peut être alimenté en vapeur mixte de vapeur de chauffage et de vapeur de détente, et un deuxième étage (25) de l'échangeur de chaleur (20) peut être alimenté en vapeur de chauffage.

4. Séchoir à évaporation selon la revendication 3,
**caractérisé en ce que** des récipients de condensat séparés (33, 35) sont associés aux deux étages (23, 25) et sont couplés au récipient de détente (30).

5. Séchoir à évaporation selon la revendication 4,
**caractérisé en ce que** les récipients de condensat (33, 35) sont couplés au récipient de détente (30) par une vanne de régulation (53, 55).

6. Séchoir à évaporation selon la revendication 4 ou 5,
**caractérisé en ce que** les récipients de condensat (33, 35) présentent un niveau de pression égal ou inférieur à la pression de la vapeur de chauffage.

7. Séchoir à évaporation selon l'une des revendications précédentes,
**caractérisé en ce qu'**il est conçu comme un séchoir à évaporation à lit fluidisé ayant une chambre de traitement (10) de type annulaire et est pourvu d'un dispositif de transport (16) pour amener un agent de fluidisation par le bas dans la chambre de traitement (10), des cellules s'étendant dans la direction verticale étant formées dans la chambre de traitement (10), dont une cellule forme une cellule d'extraction non traversée ou traversée de manière réduite par le bas par l'agent de fluidisation, à l'extrémité inférieure de laquelle est disposée la sortie de produit (12), les cellules étant ouvertes à leurs extrémités supérieures.

8. Séchoir à évaporation selon l'une des revendications précédentes,
**caractérisé en ce que** plusieurs pompes (40) sont montées en parallèle.

9. Séchoir à évaporation selon l'une des revendications précédentes,
**caractérisé en ce qu'**une surpression règne dans la chambre de traitement (10).

10. Séchoir à évaporation selon l'une des revendications précédentes,
**caractérisé en ce qu'**une conduite de liaison (42) mène du récipient de détente (30) à un poste de mélange (3) qui est placé en aval d'un dispositif de production de vapeur (2) ou d'une turbine et dans lequel la vapeur de chauffage est mélangée avec le condensat provenant du récipient de détente (30) et/ou des récipients de condensat (33, 35, 36).

11. Séchoir à évaporation selon l'une des revendications précédentes,
**caractérisé en ce qu'**une vanne de régulation (54) est disposée entre la pompe (40) et le dispositif de production de vapeur (2).

12. Séchoir à évaporation selon l'une des revendications précédentes,
**caractérisé en ce que** le condensat provenant des plaques chauffantes (28) ou des dispositifs de chauffage est acheminé de la chambre de traitement (10) ou de l'extérieur de la chambre de traitement (10) vers le récipient de détente (30) directement ou via des récipients de condensat (33, 35, 36) ou des purgeurs de condensat (37).

13. Procédé de fonctionnement d'un séchoir à évaporation (1) pour le séchage de particules, comprenant
- une chambre de traitement (10) présentant au moins une entrée de produit (11), par laquelle les particules à sécher sont introduites dans la chambre de traitement (10), et une sortie de produit (12), par laquelle les particules séchées sont évacuées hors de la chambre de traitement (10),
- présentant un échangeur de chaleur (20) dans lequel, par au moins une entrée (21,211), de la vapeur à haute pression est introduite comme vapeur de chauffage provenant d'un dispositif de production de vapeur (2) ou d'une turbine, et duquel le condensat est évacué par au moins une sortie de condensat (22, 222) et est amené à un récipient de détente (30),
dans lequel la vapeur de détente est pompée hors du récipient de détente (30) par au moins une pompe (40) et est amenée à la vapeur de chauffage provenant du dispositif de production de vapeur (2) ou de la turbine,
**caractérisé en ce que** la pompe (40) est conçue comme une pompe à jet de vapeur ayant un raccord de vapeur motrice (41) auquel s'applique au moins un flux partiel de la vapeur de chauffage, et dans laquelle la vapeur de détente est mélangée à la vapeur de chauffage et est amenée sous forme de vapeur mixte à l'échangeur de chaleur (20) par ladite pompe.

14. Procédé selon la revendication 13,
**caractérisé en ce que** le séchoir à évaporation (1) est alimenté en vapeur de chauffage provenant de différents dispositifs de production de vapeur (2) dans différentes qualités de vapeur.
